# EUROPEAN PATENT APPLICATION

(11) **EP 1 688 400 A2**
(43) Date of publication of application: **09.08.2006**
(21) Application number: 06101260.5
(22) Date of filing: 03.02.2006
(51) Int. Cl.: C04B 20/10, C04B 14/28, C04B 28/02

(54) **Additive for concrete, its preparation and use, and a method for manufacturing of concrete and a concrete containing said additive**

(30) Priority: 04.02.2005 FI 20050124
(71) Applicant: Finnsementti Oy, 21600 Parainen (FI)
(72) Inventor: Heikkilä, Esa, 20810 Turku (FI); Virtanen, Jorma, 20740 Turku (FI)
(74) Representative: Maskula, Silla Marjatta

(57) **Abstract**

The invention relates to an additive for additive comprising stone powder, in which the particle diameter is 2―1000 µm, which particles are coated with a substantially water-insoluble surface-active coating agent, and the use of the additive and a method for manufacturing the additive. The invention also relates to a method for improving the freeze-thaw durability of the concrete, and a concrete.

## Description

The invention relates to an additive for concrete, its preparation and use according to the preambles of the independent claims described further below. The invention also relates to a method for manufacturing of concrete and a concrete.

Concrete is manufactured from a mixture, the main constituents of which are cement, ballast and water. The freezing of hardened concrete, when it is wet, is a problem in the northern hemisphere. Concrete comprises small pores, which can contain water. When the temperature decreases below zero, the water in the concrete pores begins to freeze and expand. The expansion of the freezing water in the concrete pores can cause microcracking of the concrete, the volume of the freezing water increasing larger than the volume of the pore. The cracking increases due to repeated freezing and thawing and leads finally to the concrete scaling.

The concrete scaling can be prevented by adding an additive, an air-entraining agent, into the concrete mix in the manufacturing stage of the concrete. At present, the generally used additives, which are used for improving the freeze-thaw durability of the concrete, are liquid surface-active agents, which comprise a hydrophilic and hydrophobic part. Thus, the additive is located on the interface of the air bubbles in the concrete mix and of the surrounding concrete mix. The purpose of the additive is thus to form small air bubbles, protective pores, into the finished concrete, which air bubbles give space to the freezing water to expand. In the fresh concrete mix these air bubbles also act as an "extender", i.e. they reduce water requirement and improve the workability and the coherence of the concrete mix. Normally, about 5-6% air is needed in the concrete mix for improving the freeze-thaw durability of the concrete, which air is produced by using an additive. If no additive whatsoever is used, there is about 1-2% air in the concrete mix, which air binds to the concrete mix when mixing the components. This air, however, is in the concrete in too big bubbles in order to sufficiently improve the freeze-thaw durability of the concrete. The size of the air bubbles in the hardened concrete should preferably be about 50-200 µm in order to improve the freeze-thaw durability of the concrete.

One problem in the known liquid additives is the inconvenience of their use. The additive is normally mixed into water, in which case a ready to use additive mixture is obtained. In most cases very small amounts of additive mixture, typically only about 0.05% of the weight of cement needed for the concrete, are added to the concrete mix. The amount of the active additive in the concrete mix is thus even smaller than that. Consequently, it is very difficult to mix the additive evenly into the concrete mix. If the additive cannot be evenly mixed into the concrete mix, air bubbles of suitable size will not form into the concrete evenly, which weakens the freeze-thaw durability of the concrete.

The amount of air produced in the concrete with liquid air-entraining additives depends on the raw materials, manufacturing conditions and production equipment to be used. Factors having influence on the amount of air are, e.g., the grain-size distribution and impurities of the ballast, the consistency and temperature of fresh concrete. These matters always vary slightly in the manufacturing of concrete, and the amount of air has to be adjusted by changing the proportioning of the additive. Sometimes the alternations in the amount of air can even be big, and the concrete manufacturing process can thus be difficult to control.

Another problem in using known additives is the fact that the air bubbles produced by means of an additive, can in some cases escape from the concrete mix when processing the concrete mix, e.g., when moving, pumping, vibrating the concrete before hardening of the concrete. For example, on the vibrotable of a concrete element factory the air bubbles typically rise on the surface of the concrete element to be manufactured, on which surface they can be seen even as froth. It is apparent, that in such cases the amount and distribution of the air bubbles in the finished concrete element are no longer on the optimal level. Sometimes, "too much" additive has to be added into the concrete mix, so as to be able to be sure about the fact that the amount of the air bubbles in the finished element is suitable.

It is also known to add into the concrete mix small plastic spheres, which compress in the finished concrete when it freezes, due to the freezing pressure of the water thereby preventing the cracking of the concrete. Respectively, it is known to add into the concrete mix also small-sized rubber particles, which compress in the finished concrete when the water freezes.

The object of the present invention is to achieve such an additive for concrete and a method, by means of which the problems and drawbacks occurring in the prior art are minimised or even totally eliminated.

One object of the invention is an additive for concrete, with which the even distribution of the air bubbles in the finished concrete can be improved.

A further object of the invention is an additive for concrete, the use and dosing of which is simple and easy.

One object is also to improve the controllability of the manufacture of the freeze-thaw durable concrete and also to improve the possibilities to produce concrete of uniform quality in varying manufacturing conditions.

In order to realise the above-mentioned objects, among others, the invention is characterized by what is presented in the characterising parts of the enclosed independent claims.

A typical additive for concrete of the invention comprises stone powder, in which the particle diameter is 2-1000 µm, and which powder particles are coated with a substantially water-insoluble surface-active coating agent, which is present in the additive 0.01―1% of the weight of the stone powder.

The additive for concrete according to the invention is typically used for improving the freeze-thaw durability of the concrete.

In a typical method according to the invention the additive is prepared from stone powder, in which the particle diameter is 2-1000 µm, and the particles of the stone powder are coated with a liquid water-insoluble surface-active coating agent, which is present in the additive 0.01-1 % of the weight of the stone powder.

In a typical method according to the invention an additive, which comprises stone powder coated with a substantially water-insoluble surface-active coating agent, is mixed into the concrete mix for improving the freeze-thaw durability of the concrete.

A typical concrete of the invention comprises cement, additive and air, and the amount of air in the hardened concrete is 2-5%, preferably 2―4%, and its freeze-thaw durability meets the requirements of the concrete standards BY50 in the stress classes XF1, XF2, XF3 and/or XF4.

Now it has been surprisingly found that upon adding stone powder, the particles of which have been coated with a substantially water-insoluble surface-active coating agent, into the concrete mix, the air in the concrete mix forms air bubbles around the individual stone particles of the additive. In a wet concrete mix the air bubble is formed around these small stone particles, because the surface of the particles repels the wet water containing concrete mix. Since the stone powder according to the invention is easy to mix evenly into the concrete mix with generally available equipments, such as conventional concrete mixers, the even forming and distribution of the air bubbles, which are important for the freeze-thaw durability of the finished concrete, into the concrete mix can be guaranteed with the aid of the invention. With the aid of the invention also the escape of the formed bubbles from the concrete mix can be remarkably reduced during its process. The air bubbles form around the particles of the stone powder of the additive due to the coating agent and stay bound to the particles also upon processing the concrete mix. Thus, the air bubbles do not escape from the concrete mix, but stay evenly in the mix until the mix hardens. According to the invention an additive comprising comminuted stone material, the surface of which has been treated with a surface-active coating agent to be at least partly hydrophobic, is added to the concrete mix.

An advantage of the invention is also the fact that small amounts of coating agent are needed for coating the stone powder particles of the additive, which naturally keeps the manufacturing costs of the additive on an optimal level.

In this application a water-insoluble agent refers to an agent, which dissolves in water less than 1 g/I, typically less than 0.5 g/l at a temperature of 20°C.

In this application a surface-active agent refers preferably to an agent, which comprises at least one functional hydrophobic group, such as a straight carbon chain included in the fatty acid, which carbon chain typically is at least 12 carbon atoms long, preferably at least 16 or 18 carbon atoms long. The hydrophobic group can also be some other functional group, which is suitable for the purpose.

In this application a freeze-thaw durable concrete refers to a concrete, which withstands repeated frosting and thawing when it is wet, also in a saline environment. The concrete withstands thus freeze-thaw exposure for the designated durability life with a certain probability, typically with 95% probability. The fact, how well the concrete withstands freeze-thaw exposure depends on for what kind of circumstances the concrete is subjected to and on the properties of the concrete itself. The concretes are usually divided into different stress classes on the basis of their durability. When concrete structures are built, the stress class and designated durability life are given as design details. In the stress class XF1 the concrete is subjected to a freeze-thaw exposure moderately water-saturated without being simultaneously in contact with a de-icer or de-icers. Moderate saturation with water means that less than 50%, typically maximum 40%, very typically maximum 30%, at times maximum 20%, of the capillary and sealing pores of concrete are filled with water. This test condition corresponds to conditions to which, for example, the wall of a building, which gets wet due to rain, is exposed to. In the class XF1, the concrete weathering in a Borås test performed with salt-free water should be m₅₆<500 g/m². In the stress class XF2 the concrete is, for one, subjected to a freeze-thaw exposure moderately water-saturated the concrete being simultaneously in contact with a de-icer or de-icers. This test condition corresponds to conditions to which, for example, vertical concrete surfaces of noise barriers on the roadsides are exposed to. In the class XF2, the concrete weathering in a Borås test performed with salted water must be m₅₆<500 g/m². In the stress class XF3 the concrete is subjected to a freeze-thaw exposure substantially water-saturated without getting in contact with de-icers. Substantial saturation with water means that over 50 %, typically at least 70%, very typically at least 80%, at times at least 90%, of the capillary and sealing pores of the concrete are filled with water. Sometimes substantially all capillary and sealing pores can thus be filled with water, whereupon only the protective concrete pores are filled with air. This test condition corresponds to conditions to which, for example, a horizontal concrete balcony slab can be exposed to. In the class XF3, the concrete weathering in a Borås test performed with salt-free water must be m₅₆<200 g/m². In the stress class XF4 the concrete is subjected to a freeze-thaw exposure substantially water-saturated being simultaneously in contact with de-icers. This test condition corresponds to conditions to which, for example, horizontal concrete surfaces of parking storeys of car parks can be exposed to. In the class XF4, the concrete scaling in a Borås test performed with saline water must be m₅₆<200 g/m². The Borås test has been generally explained in the reference example.

According to a preferred embodiment of the invention limestone is used as a raw material of the stone powder to be used in the additive for concrete. In that case, the additive comprises mainly limestone, i.e. the percentage of the limestone of the stone material of the additive is over 70%, typically over 85%, at times over 90%, sometimes even nearly 100%, of the total weight of the stone material. The use of limestone is preferred, since it is easy to comminute to the required particle size and it is suitable to be used in the concrete mix. Additionally, the colour of the limestone is light, so that the use of an additive based on it does not cause discolouration of the finished concrete. In some embodiments, for example, when manufacturing a coloured architectural concrete also other types of stone, for example granite or gabbro, may be used as a stone material, which is to be coated, of the additive. The stone material of the additive can also simultaneously comprise several different types of stone. In addition to the stone material the additive can also comprise other constituents.

According to an embodiment of the invention the diameter of the stone particles of the stone powder used as an additive for concrete is typically 2-1000 µm, sometimes 50-300 µm, at times 100-250 µm, typically 30-500 µm, more typically 150-450 µm or 250-450 µm. In a preferable embodiment of the invention 90% of the particles have a diameter, which is in the range of 2-65 µm, typically 10―45 µm.

According to an embodiment of the invention at least 40%, typically at least 50%, preferably at least 70%, most preferably at least 80%, sometimes even over 90% of the added surface of the stone particles of the stone powder of the additive has been coated with a water-insoluble surface-active agent, i.e. is covered by a surface-active agent. The surface of the stone powder particles does not need to be totally coated. From the invention's point of view it is sufficient that the surface is coated to such a degree that it shows hydrophobicity. This way the forming of the air bubble around the individual stone particle can be guaranteed.

According to a preferred embodiment of the invention the water-insoluble surface-active agent comprises fatty acid amine, polyester resin, silicone or silane. The coating agent can also be a mixture of several water-insoluble agents. Fatty acid amine refers in this context to the amine of a linear, unbranched carboxylic acid. The carbon chain of the carboxylic acid can have 12-26 carbon atoms, usually 16 or 18 carbon atoms, and the carbon chain can be saturated or contain one or several double bonds.

According to a preferred embodiment of the invention the stone material used as a raw material of the additive is grinded in a grinder, for example, in a ball mill, until the diameter of the stone powder particles forming from the stone material is 2-1000 µm, and the stone powder particles are coated with a liquid substantially water-insoluble surface-active coating agent. According to an embodiment the coating agent can be added to the grinder, for example, to the ball mill, already during the grinding of the stone material, for coating the stone particles forming to the stone material to be grinded. This way the stone powder can be simultaneously grinded to a suitable particle size and the particles can be coated by a coating agent. Any grinder suitable for grinding the stone material to be used can be used for grinding the stone powder. Preferably, for example, a ball mill can be used. The stone material is typically grinded in the grinder to the fineness of 400-500 m²/kg.

According to another embodiment of the invention the stone powder and the coating agent are mixed together for coating the stone powder. This way the stone powder can be coated after grinding by mixing the stone powder obtained by grinding and the coating agent together, or a ready made stone powder, which is coated by mixing a coating agent to the stone powder, can be used. In this embodiment the mixing must be sufficiently efficient, so that the coating agent mixes evenly to the stone powder and coats at least part of the stone powder particles.

According to an embodiment of the invention the water-insoluble surface-active coating is used in an amount of 0.02-0.8%, typically 0.05-0.5%, preferably about 0.1-0.4%, of the weight of the stone powder. The surface-active coating agent is particularly preferably used in an amount of 0.015-0.05%, sometimes 0.02-0.04%, often 0.025-0.035%, of the weight of the stone powder. The coating agent is preferably used in such an amount, which enables a sufficient coating of the stone powder particles. An amount of coating agent, which enables the forming of an air bubble or air bubbles around an individual particle, is considered as sufficient coating. All stone powder particles present in the additive do not need to be coated. According to another embodiment of the invention the coating agent is added to the stone powder 0.01―0.1 percentage by volume, preferably 0.03―0.1 percentage by volume, more preferably 0.06-0.09 percentage by volume.

According to an embodiment of the invention the coating agent, preferably fatty acid amine, is heated to the temperature of 30-60 °C, preferably to the temperature of 40-50 °C before it is to the stone powder. By heating it is guaranteed that the coating agent to be added is in a suitable form, so that its addition to the stone powder, for example, in connection with the grinding would be simple. Many suitable coating agents are in paste form at the room temperature, but they can be obtained to a suitable liquid form by heating, whereupon their dosing is easy.

According to an embodiment of the invention the additive according to the invention is added in an amount of 30-150 kg/m³ concrete, preferably 50-100 kg/m³ concrete. Typically, the additive is thus added 2-8.5%, preferably 2.5-5.5%, of the weight of the ballast of the concrete mix. The additive according to the invention is thus remarkably easy to dose into the concrete mix, since the amounts to be added are so big that their weighing sufficiently accurately is simple. Similarly, the even distribution of the additive to the concrete mix is easier to achieve, since a larger amount of solid additive is easy to mix evenly to the concrete mix by using available devices, such as a concrete mixer.

By using the additive according to the invention concrete, which has a very good freeze-thaw durability, but the air content of which is typically only 2-5%, can be prepared. Otherwise the concrete can be manufactured by using fully conventional methods and raw materials. Lower air content increases the compressive strength of the finished concrete, which is naturally an eligible property. When using the additive according to the invention it is also not necessary to add the additive to the concrete mix in excess, since the air bubbles forming around the coated stone particles remain evenly distributed in the concrete mix also during its processing. Thus, there is no need to provide for the "escape" of the air from the concrete mix, for example, when pumping or vibrating the concrete mix.

### REFERENCE EXAMPLE

In example 1 a concrete of the invention was prepared by mixing 371 kg cement, 1627 kg ballast, 106 kg additive of the invention and 196 kg water. From this concrete mix obtained was made a test casting, with which the properties of the concrete mix and finished hardened concrete were evaluated. The obtained test values are presented in table 1.

A concrete mix without addition of the additive was also prepared for reference. In that case 419 kg cement, 1839 kg ballast and 165 kg water were mixed. From the obtained concrete mix was made a test casting, with which the properties of the concrete mix and the finished hardened concrete were evaluated. The obtained test values are presented in table 2.

The freeze-thaw durability of both obtained finished concretes was tested with a Borås-test, i.e. with a test according to the Swedish standard SS 13 72 44. In this test the durability of the concrete surface is tested in a 3 % NaCl saline or in pure water. The test can be performed in four different ways:
a) a 150 mm cube is sawed into two pieces and the cut surface is tested,
b) the top surface or the surface, which was against the casting mould, of the 150 mm cube is tested,
c) a bored concrete cylinder is sawed from the depth of 20 mm, and the cut surface is tested, or
d) the top surface of the bored concrete cylinder is tested.

The freeze-thaw durability of the concrete is determined at least for four samples. The sample is sawed from the middle of the 150 mm cube or parallel with the top surface or the casting skin. The height of the samples is 50 ± 2 mm. If the sample is sawed from the concrete cylinder, the diameter of the cylinder must be at least 95 mm. The area of the sample surface should be at least 50 000 mm². The number or the mass of the concrete samples should be the same in the tests in order to obtain comparative results.

The concrete samples are allowed to harden in the way defined in the standard SS 13 72 45 for 21 days. After this the sample surfaces are sawed from the concrete cubes. The surfaces are washed, dried with a sponge and the samples are transferred back to the hardening conditions, in which the relative humidity is 60 ± 5%. The samples are stored this way, and after 22-28 days rubber plates are glued to all other concrete surfaces except to the test surface. The seams between the test surface and the rubber plates are seamed with a silicone glue. The test surface is then saturated with pure water. The surfaces covered by the rubber plates are later isolated with an insulation material. Pure water is discharged 15 minutes before the beginning of the test and replaced with saline. The evaporation of the sample solution is prevented by a plastic film to be set on the sample.

The test begins in the freezing container after 31 days from the casting of the test samples. The temperature of the test solution on the sample is observed during the test. In the test the samples are subjected to freezing-thawing cycles that last 24 hours. The temperature is decreased 3.5 °C/h on average until the temperature of -20 °C is achieved. The concrete is held at this temperature for 4 hours at maximum, after which the temperature is increased 4.7 °C/h on average for eight hours. The rates of temperature increase and decrease are defined in more detail in the standard.

In the Borås-test it is measured how much material has come loose from the test surface after 7, 14, 28, 42 and 56 days, and it is also calculated the average and the standard deviation for the loosened material. The loosened material is collected from the surface of the concrete sample together with saline water with a defined brush. The water and the sample are filtrated, dried and weighed. To continue the test new test water is poured on the concrete sample. The test results are evaluated after 56 test days on the basis of the amount of the loosened material as presented in Table 1.

**Table 1. The evaluation table of the Borås-test results**

| Freeze-thaw durability | |
|---|---|
| Excellent | m₅₆ < 0.10 kg/m² |
| Good | (a) m₅₆ < 0.2 kg/m² or |
| | (b) m₅₆ < 0.5 kg/m² and m₅₆/m₂₈ < 2 or |
| | (c) m₁₁₂ < 0.5 kg/m² |
| Satisfactory | (a) m₅₆ < 1 kg/m³ and m₅₆/m₂₈ < 2 or |
| | (c) m₁₁₂ < 1.00 kg/m² |

The test value m₅₆ obtained for the concrete according to the invention, in the manufacturing of which concrete it had been used the additive according to the invention, was 0.16 kg/m², which represents the scaling after 56 days (Table 2). Thus, according to the evaluation of the Borås-test the freeze-thaw durability of the concrete manufactured according to the invention was good.

Respectively, the test value m₅₆ obtained for the concrete manufactured without the additive was 4.38 kg/m², which represents the scaling after 56 days (Table 3). Thus, according to the evaluation of the Borås-test the freeze-thaw durability of the concrete manufactured without the additive was less than satisfactory. The reference test indicated thus that a concrete, the freeze-thaw durability of which is considerably better than the freeze-thaw durability of the concrete manufactured without the additive, can be produced by using the additive according to the invention.

It is apparent to the man skilled in the art that the invention is not limited exclusively to the examples described above, but that it can vary within the frames of the claims presented below.

**Table 2. Test values for the concrete, in the manufacturing of which it has been used the additive according the invention.**

| **CONCRETE MIX TESTS** | | | |
|---|---|---|---|
| | | | |
| Deflection | instantly | cm | 7.0 |
| | After 30 minutes | cm | 5.0 |
| | After 60 minutes | cm | 4.0 |
| | | | |
| Density | instantly | kg/m³ | 2301 |
| | After 30 minutes | kg/m³ | 2311 |
| | After 60 minutes | kg/m³ | 2324 |
| | | | |
| Amount of air | instantly | % | 4.4 |
| | After 30 minutes | % | 4.3 |
| | After 60 minutes | % | 4.2 |
| | | | |
| **HARDENED CONCRETE** | | | |
| | | | |
| Density | 1 d | kg/m³ | 2375 |
| | 28 d | kg/m³ | 2287 |
| | | | |
| Compression strength MN/m² | | | |
| 1 d | | | 9.4 |
| 28 d | | | 43.3 |
| Scaling after 56 rounds in the Borås test kg/m² | | | 0.16 |

**Table 3. Test values obtained for the concrete manufactured without additive**

| **MIX TESTS** | |
|---|---|
| | |
| Amount of air % | |
| instantly | 2.3 |
| After 60 minutes | 2.3 |
| | |

| **HARDENED CONCRETE** | |
|---|---|
| | |
| Strength [MPa] | |
| After 1 d | 27.6 |
| After 7 d | 58.8 |
| After 28 d | 71.8 |
| Scaling after 56 rounds in the Borås test kg/m² | 4.38 |

## Claims

1. An additive for concrete, **characterised in that** it comprises stone powder, in which the powder particle diameter is 2-1000 µm, and which particles have been coated with a substantially water-insoluble surface-active coating agent, which is present 0.01―1% of the weight of the stone powder.

2. The additive according to claim 1, **characterised in that** the stone powder comprises mainly limestone.

3. The additive according to claim 1, **characterised in that** the coating agent comprises fatty acid amine, polyester resin, silane or silicone.

4. Use of the additive according to claim 1 for improving freeze-thaw durability of a concrete.

5. A method for manufacturing an additive for concrete, **characterised in that** the additive is prepared from stone powder, the particle diameter of which is 2-1000 µm, and that the stone powder particles are coated with a liquid substantially water-insoluble surface-active coating agent, which is used in an amount of 0.01-1 % of the weight of the stone powder.

6. The method according to claim 5, **characterised in that** the stone material is grinded in a grinder, for example, in a ball mill, until the particle diameter of the stone powder forming from the stone material is 2-1000 µm, and that the stone powder particles are coated with a liquid substantially water-insoluble surface-active coating agent.

7. The method according to claim 6, **characterised in that** during the grinding of the stone material the coating agent is added to the grinder, for example, to the ball mill, to the stone material to be grinded for coating the forming stone particles.

8. The method according to claim 5, **characterised in that** the stone powder and the coating agent are mixed together for coating the stone powder.

9. The method according to claim 5, **characterised in that** the coating agent is heated to the temperature of 30-60 °C before adding it to the stone powder.

10. A method for improving the freeze-thaw durability of a concrete, in which method
- an additive is added to a concrete mix,
**characterised in that**
the additive, which comprises stone powder coated with a substantially water-insoluble surface-active coating agent, is added to the concrete.

11. The method according to claim 10, **characterised in that** the additive is added in an amount of 30-150 kg additive/m³ concrete.

12. A concrete, which comprises cement, additive and air, **characterised in that** the air content of the hardened concrete is 2-5%, and its freeze-thaw durability meets the requirements of the concrete standards BY50 in the stress classes XF1, XF2, XF3 and/or XF4.

13. The concrete according to claim 12, **characterized in that** it comprises the additive according to claim 1.
